# EUROPEAN PATENT APPLICATION

(11) **EP 1 748 400 A1**
(43) Date of publication of application: **31.01.2007**
(21) Application number: 06014507.5
(22) Date of filing: 12.07.2006
(51) Int. Cl.: G08G 1/16, B60K 31/00

(54) **Travel assistance device, method and computer program product**

(30) Priority: 25.07.2005 JP 2005214232
(71) Applicant: Mazda Motor Corporation, Aki-gun, Hiroshima 730-8670 (JP)
(72) Inventor: Kawamata, Shiyouta, c/o Mazda Motor Corp., Aku-gun, Hiroshima 730-8670 (JP); Kore, Haruhisa, c/o Mazda Motor Corp., Aku-gun, Hiroshima 730-8670 (JP)
(74) Representative: Müller-Boré & Partner Patentanwälte

(57) **Abstract**

The relative position of the surrounding vehicle **A1** to the traveling vehicle is determined from respective position information of the traveling vehicle and the surrounding vehicle **A1** obtained through communication between vehicles. The processing area of the image **S** picked up by the camera **11** is restricted on the basis of this relative position. By comparing the template **T1** that is obtained with a scale-transfer from the previously-memorized template **T0** on the basis of the position information of the vehicle **A1** to the image of the vehicle **A1** with an image matching, the precious position of the surrounding vehicle **A1** is detected. Thereby, the passenger protection devices **15 - 18** are operated. Accordingly, the processing time of image data picked up by the camera can be properly shortened and the accuracy of recognition of obstacles can be improved.

## Description

The present invention relates to a travel assistance device, method and computer program product for a vehicle that can properly assist recognition, judgment and/or operation of a driver by detecting one or more surrounding obstacles and thereby reduce troubles in a vehicle traveling.

Conventionally, a travel assistance device for a vehicle is known, which can assist driver's recognition, judgment and operation so as to avoid crashes with any obstacles, such as other vehicles, existing in surroundings of the traveling vehicle, by using communication between vehicles and a camera, such as CCD camera or CMOS camera, to pick up images and detect such obstacles. For example, Japanese Patent Application Laid-Open Nos. 2001-283381 or 2000-68923 disclose a technology in which existing obstacles on a traveling road can be recognized on the basis of image data of surroundings picked up by the camera of the traveling vehicle and information obtained through communication between vehicles. Also, Japanese Patent Application Laid-Open No. 2005-5978 discloses a technology in which an existing area of obstacles is estimated on the basis of image data of the camera and data from the communication between vehicles.

Herein, there is a certain problem. Namely, in order to detect the obstacles by processing the image data of surroundings that are captured by the camera of the traveling vehicle as described above, the traveling vehicle generally needs to in advance prepare for some data base with respect to generalized characteristics of the surrounding vehicles and then to compare the data base with the image data picked up for the recognition of the obstacles. Accordingly, in a case where such data base contains lots of information, processing image data would require a long time. Meanwhile, in a case where information of data base is too few, accuracy of recognition of obstacles would deteriorate.

The present invention has been devised in view of the above-described problem, and an object of the present invention is to properly shorten a processing time of image data picked up by the camera and improve accuracy of the recognition of obstacles.

This object is solved according to the invention by the features of the independent claims. Preferred embodiments of the present invention are subject of the dependent claims.

According to the present invention, there is provided a travel assistance device for a vehicle, comprising a camera operative to pick up an image of (at least part of) surroundings of a traveling vehicle, a position detecting device operative to detect a position of the traveling vehicle, a signal receiving device operative to receive a signal from at least one of other vehicles than the traveling vehicle through communication between vehicles, a position relationship determining device operative to determine a position relationship between the traveling vehicle and at least one of the other vehicles on the basis of the position of the traveling vehicle detected by the position detecting device and data with respect to a position of the other vehicles that is contained in the signal received by the signal receiving device, a surrounding vehicle estimating device operative to estimate characteristics of at least one of the other vehicles that appear in the image picked up by the camera on the basis of data with respect to a feature of the other vehicles that is contained in or deduced from the signal received by the signal receiving device and the position relationship determined by the position relationship determining device, and a vehicle identifying device operative to identify a specified (predetermined or predeterminable) vehicle among others that appear in the image picked up by the camera on the basis of the vehicle's characteristics estimated by the surrounding vehicle estimation device.

It should be understood that in view of having "communication between vehicles" for obtaining or receiving a signal from the at least one of other vehicles than the traveling vehicle this may be performed by recognizing a pattern on or of the other vehicle by means of the camera or any other means such as via a central station such as provided on bridges or by means of a satellite system.

Accordingly, since a specified (predetermined or predeterminable) vehicle is identified among others on the basis of the vehicle's characteristics estimated with the data with respect to the feature of at least one of other vehicles obtained through the communication between vehicles and the position relationship between the traveling vehicle and at least one of other vehicles, it may be unnecessary that the traveling vehicle in advance prepares for some data base with respect to surrounding vehicles and then compares such data base to the image picked up for identifying the specified vehicle among others, so a time for processing the image can be shortened properly. Also, since detailed data with respect to the feature of the surrounding vehicles can be obtained through the communication between vehicles, an accurate detection of the surrounding vehicles can be provided.

According to an embodiment of the present invention, there is further provided an image-area restricting device operative to restrict an area of the image for identification by the vehicle identifying device on the basis of the position relationship determined by the position relationship determining device. Thereby, since the area of the image for the identification is restricted on the basis of the position relationship between the traveling vehicle and other surrounding vehicles, the image area to be processed can be narrowed and thereby the processing time can be shortened properly.

According to another embodiment of the present invention, there is further provided a vehicle-crash possibility estimating device operative to estimate a possibility of a crash between the traveling vehicle and the vehicle specified by the vehicle identifying device. Thereby, since the possibility of the crash with the specified vehicle identified in the image is estimated, an accurate prediction of the crash with surrounding vehicles can be provided.

According to another embodiment of the present invention, the vehicle-crash possibility estimating device is configured to estimate the possibility of the crash on the basis of respective histories with respect to a traveling speed and/or a traveling direction of the traveling vehicle and/or the vehicle specified by the vehicle identifying device. Thereby, since the possibility of the crash is estimated on the basis of the respective histories with respect to the traveling speed and/or direction of the traveling vehicle and/or other surrounding vehicles, the accuracy of the crash prediction can be further improved by predicting traveling paths of the traveling vehicle and other surrounding vehicles.

According to another embodiment of the present invention, the vehicle-crash possibility estimating device is configured to also estimate a hitting portion and angle at the crash, and there is provided a passenger protection device to operate on the basis of the hitting portion and/or angle estimated by the vehicle-crash possibility estimating device so as to protect a passenger of the traveling vehicle. Thereby, since the hitting portion and/or angle at the crash are also estimated and the passenger is protected according to these estimated portion and/or angle, a proper operation of the passenger protection device can be provided.

According to the invention, there is further provided a travel assistance method for a vehicle, in particular using a travel assistance device according to the invention or a preferred embodiment thereof, comprising the following steps:
picking up an image of surroundings of a traveling vehicle;
detecting a position of the traveling vehicle;
receiving a signal from at least one of other vehicles than the traveling vehicle through communication between vehicles;
determining a position relationship between the traveling vehicle and the other vehicles on the basis of the detected position of the traveling vehicle and data with respect to a position of at least one the other vehicles that is contained in the signal received;
estimating or determining characteristics of at least one of the other vehicles that appear in the picked up image on the basis of data with respect to a feature of the other vehicles that is contained in the received signal and the determined position relationship; and
identifying a specified vehicle among others that appear in the picked up image on the basis of the estimated or determined vehicle's characteristics.

It should be understood that in view of having "communication between vehicles" for obtaining or receiving a signal from the at least one of other vehicles than the traveling vehicle this may be performed by recognizing a pattern on or of the other vehicle by means of the camera or any other means such as via a central station such as provided on bridges or by means of a satellite system.

According to a preferred embodiment of the invention, the travel assistance method further comprises a step of restricting an area of the image for identification or determining step on the basis of the determined position relationship.

Preferably, the travel assistance method further comprises a step of estimating a possibility of a crash between the traveling vehicle and the vehicle specified in the specifying step.

Most preferably, in said vehicle-crash possibility estimating step:
the possibility of the crash is estimated on the basis of respective histories with respect to a traveling speed and/or a traveling direction of the traveling vehicle and/or the vehicle, and/or
a hitting portion and/or angle at the crash is estimated, and there is provided a passenger protection device to operate on the basis of the hitting portion and/or angle estimated so as to protect a passenger of the traveling vehicle.

According to the invention, there is further provided a computer program product, in particular embodied on a computer-readable storage medium or signal, comprising computer readable instructions which, when loaded and executed on a suitable system perform the steps of a travel assistance method according to the invention or a preferred embodiment thereof.

Other features, aspects, and advantages of the present invention will become apparent from the following description which refers to the accompanying drawings. It should be understood that even though embodiments are separately described, single features thereof may be combined to additional embodiments.
FIG. **1** is a layout diagram of parts of a vehicle assistance device for a vehicle according to a preferred embodiment of the present invention.
FIG. **2** is a control system diagram of a control unit and others of the vehicle assistance device for a vehicle.
FIG. **3** is a flowchart of an exemplified control operation of the vehicle assistance device for a vehicle.
FIG. **4** is an explanatory diagram of an image of surrounding vehicles that is picked up by a camera.
FIG. **5** is an explanatory diagram showing restriction of an image-processing area in the picked-up image.
FIG. **6** is a plan view showing a position relationship between a traveling vehicle and a surrounding vehicle in front of the traveling vehicle in a vehicle width direction and a vehicle traveling direction.
FIG. **7** is an explanatory diagram showing a vehicle width and a central position of the surrounding vehicle in the picked-up image.
FIG. **8** is a side view showing the position relationship between the traveling vehicle and the surrounding vehicle in front of the traveling vehicle in a vehicle height direction and the vehicle traveling direction.
FIG. **9** is an explanatory diagram showing a vertical-direction position of the surrounding vehicle in the picked-up image.
FIG. **10** is an explanatory diagram showing a template of the surrounding vehicle that is estimated on the basis of the vehicle width, the central position and the vertical-direction position of the surrounding vehicle in the picked-up image.
FIG. **11** is an explanatory diagram showing a scale transfer of the template of the surrounding vehicle.

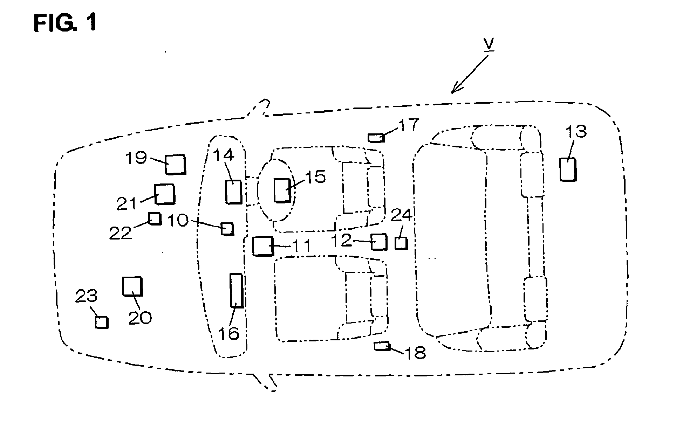

Hereinafter, a preferred embodiment of the present invention will be described referring to the accompanying drawings. FIG. **1** is a layout diagram of parts of a vehicle assistance device for a vehicle **V** according to the present embodiment. The vehicle assistance device **1** comprises at least one camera **11,** such as a CCD camera or a CMOS camera, that is preferably provided near or at a room or rearview mirror. The camera **11** picks up an image of surroundings of a traveling vehicle V (in particular a forward surrounding thereof) to identify one or more obstacles from image data.

Also, the vehicle assistance device **1** comprises at least one antenna **12** for communication between vehicles as a signal receiving device that preferably is provided at an upper portion, for example, a roof portion. This antenna **12** receives and/or sends signals from or to other vehicles that exit around the traveling vehicle through communication between vehicles. Herein, the signals sent from the surrounding vehicles contain vehicle information with respect to one or more of the following: vehicle's position, model kind, size, feature, body color, GPS coordinates, traveling direction, traveling speed, and so on.

Further, the vehicle assistance device **1** comprises a position-detecting antenna **13** as a position detecting device that is preferably provided at a vehicle rear portion. This antenna **13** detects a position of the traveling vehicle V on the earth by receiving signals from artificial satellites (e.g. GPS or Galileo satellites).

And, the vehicle assistance device **1** comprises an indication and/or warning device **14** that is preferably provided at a vehicle front portion, for example, at an instrument panel of the vehicle. This device **14** indicates obstacles, such as surrounding vehicles or pedestrians, that are detected by the camera 11, and warns a driver of necessity of avoiding crash or hitting with such obstacles with a visual and/or sound alarm.

The vehicle assistance device **1** further preferably comprises (or communicates therewith) a driver's-seat airbag **15,** an assistant's-seat airbag **16,** a driver's-seat seatbelt pre-tensioner **17** and/or an assistant's-seat seatbelt pre-tensioner **18,** as a passenger protection device. The driver's-seat airbag **15** is installed in or at a steering wheel and the assistant's-seat airbag **16** is installed in or at a portion above or near a glove compartment. The seatbelt pre-tensioners **17, 18** operate to pre-tension or at least partly wind up respective seatbelts to protect the passengers when the possibility of the traveling vehicle crashing or hitting against the obstacles has increased e.g. by reducing an amount of looseness of the seatbelt and/or by moving the respective passenger to an appropriate position within the seat.

The vehicle assistance device **1** comprises (or receives and/or sends signals from or to) a brake-control actuator **19,** a throttle-control actuator **20** and/or a steering-control actuator **21,** as a vehicle control device for avoiding crash or hitting. These actuators **19 - 21** operate to avoid the crash or hitting with the obstacles or reduce impact of crash or hitting to assist the driver's driving the vehicle **V** when the possibility of the traveling vehicle **V** crashing or hitting against the obstacles has increased.

Also, the vehicle assistance device **1** comprises (or receives signals from) a steering angle sensor **22,** a vehicle speed sensor **23** and/or a gyro sensor or yaw rate sensor **24** (not illustrated), as a travel-state detecting device. These sensors **22, 23** and **24** detect a vehicle speed, a steering angle, a yaw rate and/or a travel direction of the traveling vehicle **V,** respectively, so the travel state of the traveling vehicle **V** is detected.

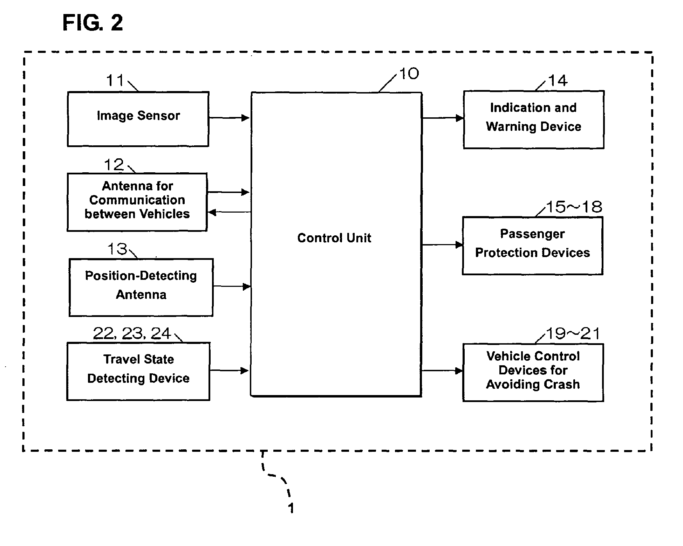

FIG. **2** is a control system diagram of a control unit **10** and others of the vehicle assistance device **1.** The control unit **10** receives respective signals of at least part of the following: the camera **11,** antenna **12** for communication between vehicles, position-detecting antenna **13** and respective signals of the sensors **22 - 24,** and outputs control signals to at least part of the following: the indication and/or warning device **14,** passenger protection devices **15 - 18** and vehicle control devices **19 - 21.** The control unit **10** also sends information with respect to the traveling vehicle **V** to the surrounding vehicles via the antenna **12** for communication between vehicles.

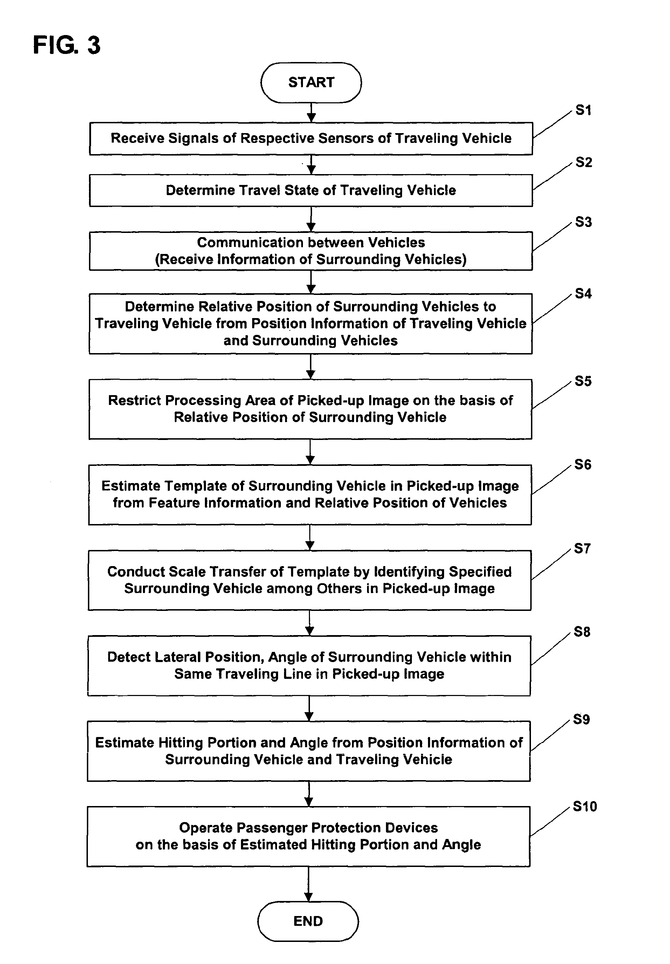

Next, an example of specific operations by the control unit **10** will be described referring to a flowchart of FIG. **3.** First, respective signals of the one or more sensors are received in step **S1,** and in step **S2** the travel state of the traveling vehicle **V** (position, traveling direction, traveling speed, yaw rate and so on) is determined. Then, in step **S3,** the information of the surrounding vehicles (position information, travel state information and/or feature information) are obtained through the communication between vehicles.

Then, in step **S4,** the relative position of the surrounding vehicles to the traveling vehicle **V** is determined from respective position information of the traveling vehicle **V** and the surrounding vehicles obtained through the communication between vehicles. In step **S5,** the processing area of the image picked up by the camera **11** is restricted on the basis of the relative position of the surrounding vehicles. Then, in step **S6,** a template of the surrounding vehicle(s) in the picked-up image is estimated on the basis of the feature information and the relative position of the vehicle. And, in step **S7,** a scale transfer of the template is conducted by identifying a specified (predetermined or predeterminable) surrounding vehicle among others in the picked-up image.

Subsequently, in step **S8,** a lateral position and/or an angle of the surrounding vehicle within the same traveling line are detected or determined. Then, in step **S9,** a hitting portion and angle of the traveling vehicle **V** against the surrounding vehicle at the possible crash are estimated on the basis of the respective position information of the traveling vehicle **V** and the surrounding vehicle. In step **S10,** the indication and warning device **14** and the passenger protection devices **15 - 18** are operated on the basis of the estimated hitting portion and/or angle (e.g. the side airbags of the side, where a side impact is expected, are controlled appropriately). Then, a control sequence ends.

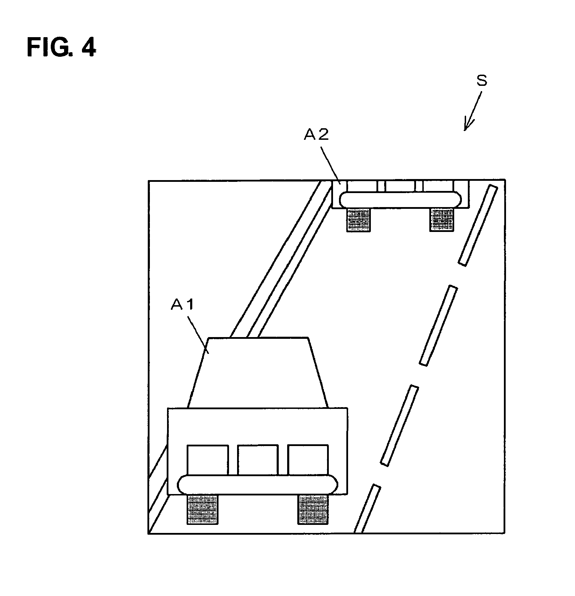

FIG. **4** shows an image **S** of surrounding that is picked up by the camera **11.** In the picked-up image **S,** a surrounding vehicle **A1** travels in front of the traveling vehicle **V** (not illustrated) substantially in the same traveling line, and another surrounding vehicle **A2** travels ahead of the vehicle **A1.**

Herein, the above-described controls by the steps **1 - 4** of FIG. **3** are executed. Namely, the traveling state of the traveling vehicle **V,** namely, various information of the traveling vehicle **V,** such as the vehicle speed and the position, are determined based on information received from the sensors. Subsequently, information of the surrounding vehicles **A1, A2,** which are potential vehicles to crash against the traveling vehicle **V,** such as the position information and the feature information of the surrounding vehicles, are received through the communication between vehicles. Thereby, respective relative positions of the traveling vehicle V to the surrounding vehicles **A1, A2** are determined on the basis of the respective position information of the traveling vehicle **V** and the surrounding vehicles **A1, A2.** Herein, the relative positions to the vehicles **A1, A2** can be obtained from their positions (latitude and longitude) on the earth that preferably are obtained from the position-detecting antenna **13** and a traveling direction from their gyro sensor **24** that is obtained through the communication between vehicles, comparing to the traveling vehicle's information of the position, traveling direction, steering angle and so on.

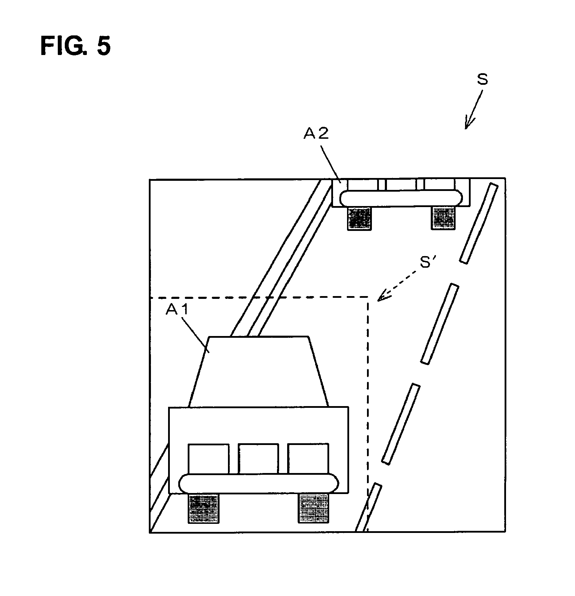

**FIG. 5** shows a state of restriction of an image-processing area **S'** including the vehicle **A1** that is most likely to crash with the traveling vehicle **V** in the picked-up image **S,** which corresponds to the step **S5** of the flowchart of FIG. **3.** After the restriction of the image-processing area **S',** the controls by the steps **S6** and **S7** are executed. Namely, characteristics of the surrounding vehicle **A1** in the image-processing area S' are estimated based on the feature information and the relative position of the surrounding vehicle **A1,** namely the template of the surrounding vehicle **A1** is estimated. For this purpose, the information (such as position, size, traveling direction) on the surrounding vehicle **A1** obtained from it by communication with the traveling vehicle **V** may be used.

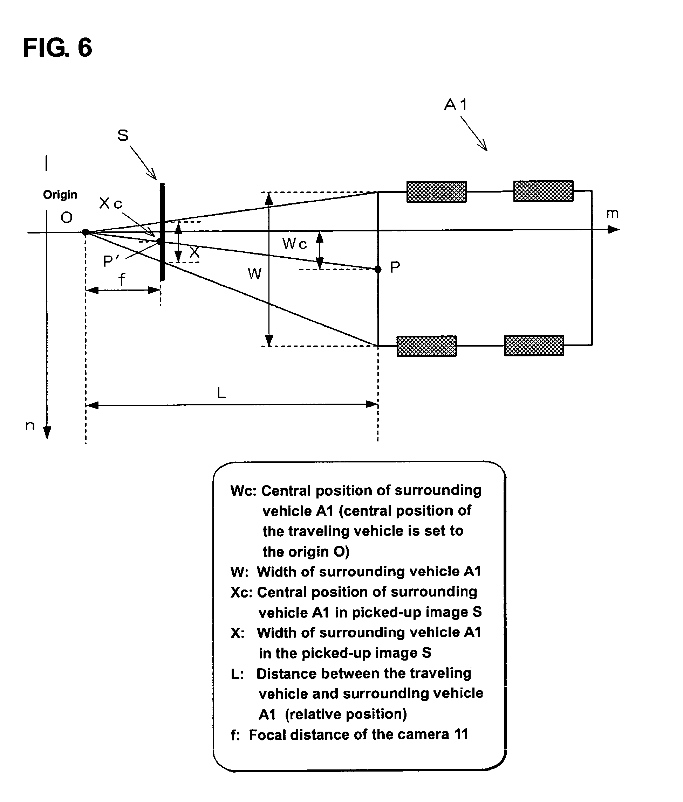

Herein, the way of estimating the template, i.e., characteristics, of the surrounding vehicle **A1** in the picked-up image **S** will be described. FIG. **6** is a plan view showing the position relationship between the traveling vehicle **V** and the surrounding vehicle **A1** traveling ahead. In FIG. **6,** the central position of the traveling vehicle **V** is shown by the origin **O,** the traveling direction of the respective vehicles is shown by an axis m, the vehicle width direction of these vehicles is shown by an axis **n,** a length from a point **p** showing a central position of the vehicle **A1** in the vehicle width direction to the axis **m,** namely the point **p** in the axis **n,** is shown by **Wc,** the width of the vehicle **A** is shown by **W,** and a length from a point **p'** showing a central position of the vehicle **A1** in the picked-up image **S** to the axis **m,** namely the point **p'** in the axis n, is shown by **Xc.** Also, the width of the vehicle **A1** in the picked-up image **S** is shown by **X,** a distance between the traveling vehicle **V** and the vehicle **A1,** namely the relative position, is shown by **L,** and a point of the picked-up image **S** in the axis **m,** namely a focal distance is shown by **f.**

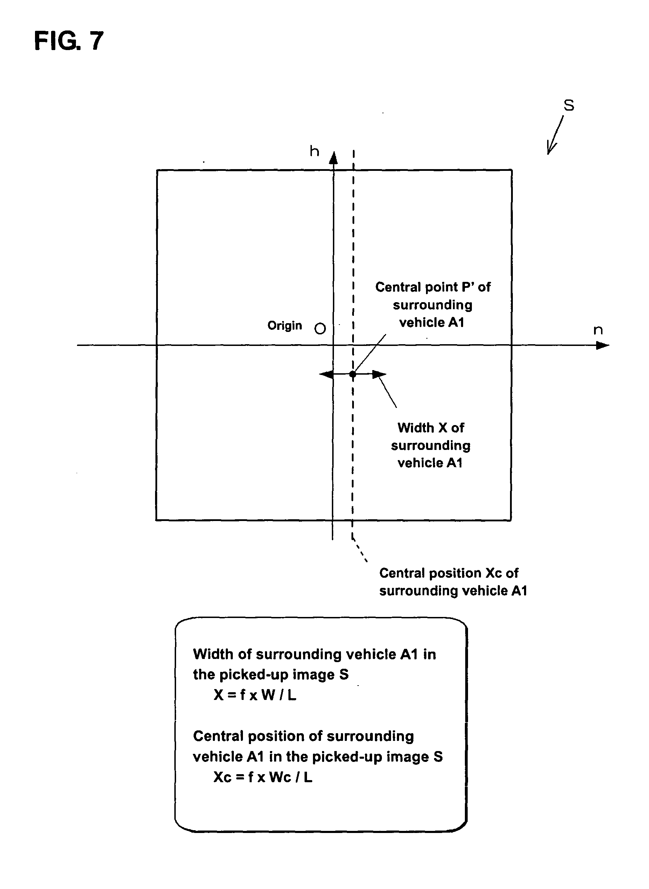

FIG. **7** shows the width **X** and the central position **Xc** of the surrounding vehicle **A1** in the picked-up image **S** (an axis h shows a height direction in the picked-up image **S** which will be described below). Herein, the width **X** of the vehicle **A1** in the picked-up image **S** is obtained from the actual vehicle width W of the vehicle A1 and the vehicle distance **L** with calculation of an equation: **X = f x W** / **L.** The central position **Xc** of the vehicle **A1** in the picked-up image **S** is obtained with an equation: **Xc = f x Wc / L.**

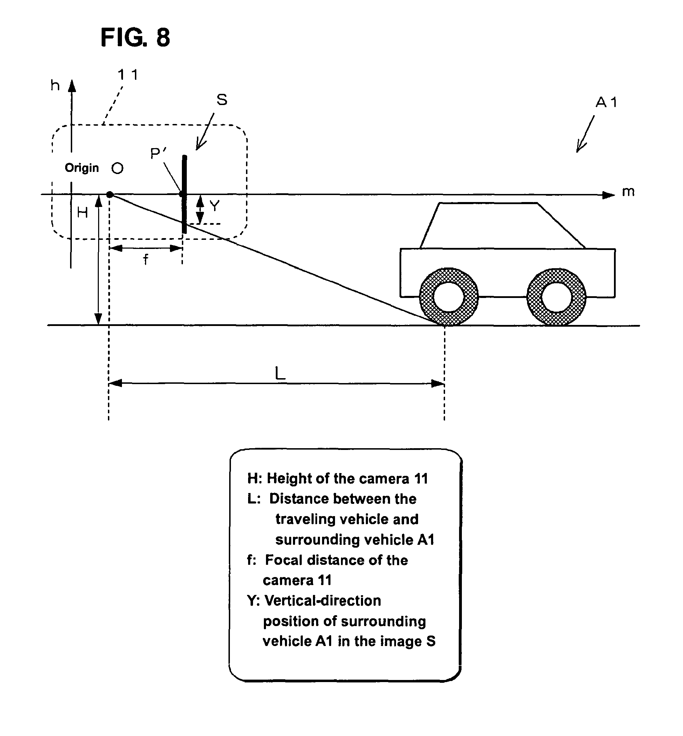

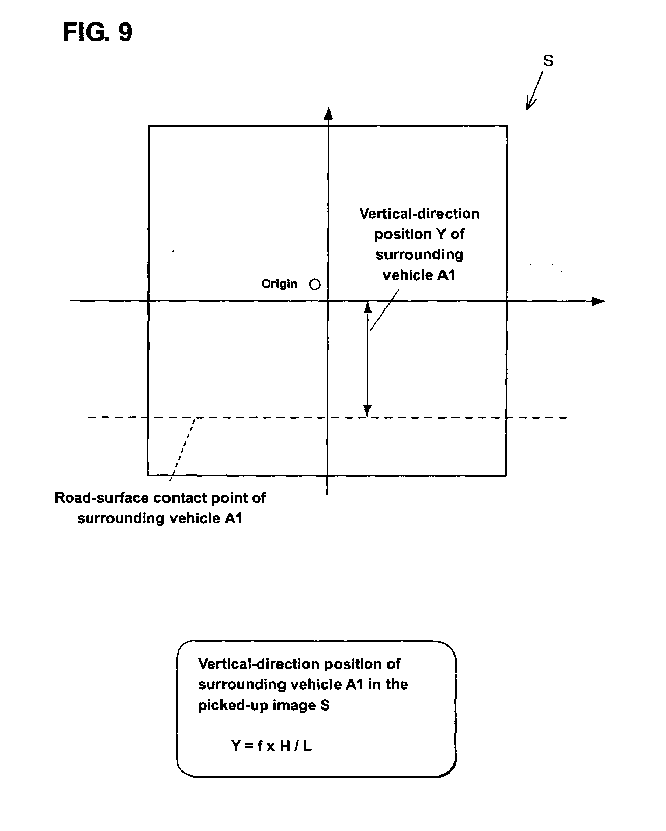

FIG. **8** is a side view showing the position relationship between the traveling vehicle **V** and the surrounding vehicle **A1.** In FIG. **8,** like FIG. **6,** the central position of the traveling vehicle **V** is shown by the origin **O,** the traveling direction of the respective vehicles is shown by the axis **m,** a direction perpendicular to the vehicle width direction of these vehicles is shown by an axis **h,** the distance between the traveling vehicle **V** and the vehicle **A1,** namely the relative position, is shown by **L,** the point of the picked-up image **S** in the axis m, namely the focal distance is shown by **f,** a disposition height of the camera **11** of the traveling vehicle **V** is shown by **H,** and a vertical-direction position of the vehicle **A1** in the picked-up image **S** is shown by **Y.** FIG. **9** shows the vertical-direction position **Y** of the vehicle **A1** in the picked-up image **S,** and the vertical-direction position **Y** is obtained from the distance **L** and the focal distance f with calculation of an equation: **Y** = **f x H** / **L.**

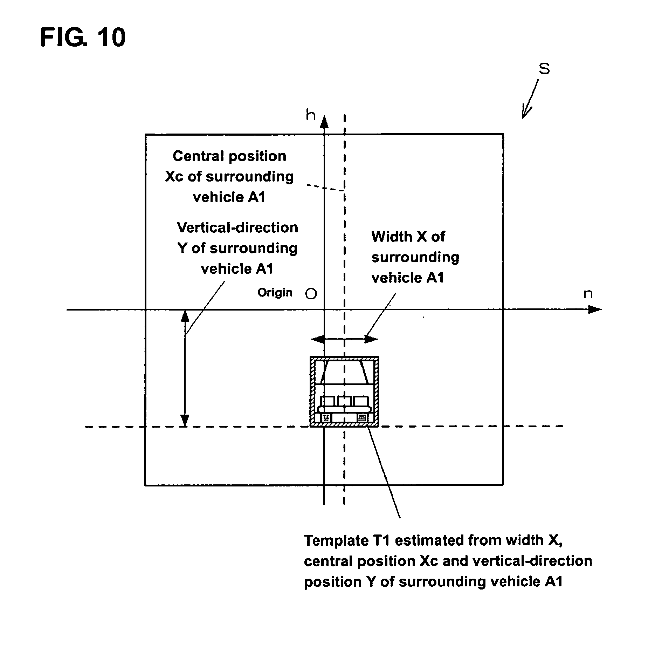

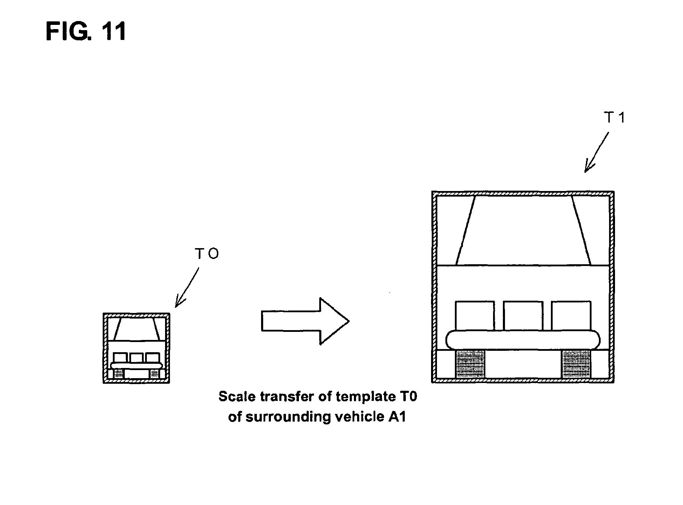

FIG. **10** shows a template **T1** of the surrounding vehicle **A1** that is estimated on the basis of the vehicle width **X,** the central position **Xc** and the vertical-direction position **Y** of the surrounding vehicle **A1** in the picked-up image **S.** FIG. **11** shows the template **T1** that is obtained with a scale-transfer from a previously-memorized template **T0** on the basis of the position information of the vehicle **A1.** By comparing the template **T1** to the image of the vehicle **A1** captured by the camera **11** with an image matching, the precious position of the surrounding vehicle **A1** is detected.

After this, controls of steps **S8 - 10** in FIG. **3** are executed. Namely, the lateral position and the angle of the surrounding vehicle **A1** in the traveling line estimated from the picked-up image **S** of FIG. **5,** and the hitting portion and angle of the vehicles are estimated or determined. Then, the passenger protection devices **15 - 18** are operated or controlled on the basis of the estimated hitting portion and angle, thereby securing the safety of the passenger of the traveling vehicle.

Herein, although the hitting portion and angle of the vehicles are estimated on the basis of the respective position information of the traveling vehicle **V** and the surrounding vehicle **A1** in the step **S9** of FIG. **3** in the present embodiment, they may be estimated on the basis of respective histories with respect to the traveling speed and/or the traveling direction of the traveling vehicle **V** and the surrounding vehicle **A1.**

As described above, since the surrounding vehicle **A1** is identified among others in the picked-up image **S** on the basis of the vehicle's template **T1** estimated with the data with respect to the feature of the vehicle **A1** obtained through the communication between vehicles and the position relationship between the traveling vehicle **V** and the vehicle **A1,** it may be unnecessary that the traveling vehicle **V** in advance prepares for some data base with respect to surrounding vehicle **A1** and then compares the data base with the picked-up image **S** for identifying the specified (predetermined or predeterminable) vehicle **A1** among others, so a time for processing the image can be shortened properly. Also, since detailed data with respect to the feature of the surrounding vehicle **A1** can be obtained through the communication between vehicles, an accurate detection of the surrounding vehicle **A1** can be advantageously provided.

Also, since the certain area **S'** for identifying the vehicle **A1** in the picked-up image **S** is restricted on the basis of the position relationship between the traveling vehicle **V** and the surrounding vehicle **A1,** the image area to be processed in the picked-up image **S** can be narrowed and thereby the processing time to identify the vehicle **A1** can be shortened properly.

Further, since the possibility of the crash with the vehicle **A1** identified in the image **S** is estimated, an accurate prediction of the crash with surrounding vehicle **A1** can be provided.

Especially, since the possibility of the crash preferably is estimated on the basis of the respective histories with respect to the traveling speed and/or direction of the traveling vehicle **V** and/or the surrounding vehicle **A1,** the accuracy of the crash prediction can be further improved by predicting traveling paths of the traveling vehicle **V** and/or the surrounding vehicle **A1.**

And, since the hitting portion and angle at the crash are also estimated and the passenger is protected according to these estimated portion and angle, a proper operation or control of the passenger protection devices **15 - 18** can be provided and thereby the safety of the passenger can be secured.

Accordingly, the relative position of the surrounding vehicle **A1** to the traveling vehicle **V** is determined from respective position information of the traveling vehicle **V** and the surrounding vehicle **A1** obtained through communication between vehicles. The processing area of the image **S** picked up by the camera **11** is restricted on the basis of this relative position. By comparing the template **T1** that is obtained with a scale-transfer from the previously-memorized template **T0** on the basis of the position information of the vehicle **A1** to the image of the vehicle **A1** with an image matching, the precious position of the surrounding vehicle **A1** is detected or estimated. Thereby, the one or more passenger protection devices **15 - 18** preferably are operated. Accordingly, the processing time of image data picked up by the camera **11** can be properly shortened and the accuracy of recognition of obstacles can be improved.

The present invention should not limited to the above-described embodiment, and any other modifications and improvements may be applied within the scope of a sprit of the present invention.

## Claims

1. A travel assistance device for a vehicle (**1**), comprising:
a camera (**11**) operative to pick up an image (**S**) of surroundings of a traveling vehicle (**V**);
a position detecting device (**13**) operative to detect a position of the traveling vehicle (**V**);
a signal receiving device (**12**) operative to receive a signal from at least one of other vehicles (**A1, A2**) than the traveling vehicle (**V**) through communication between vehicles;
a position relationship determining device (**10**) operative to determine a position relationship between the traveling vehicle (**V**) and the other vehicles (**A1, A2**) on the basis of the position of the traveling vehicle (**V**) detected by said position detecting device (**13**) and data with respect to a position of at least one the other vehicles (**A1, A2**) that is contained in the signal received by said signal receiving device (**12**);
a surrounding vehicle estimating device (**10**) operative to estimate or determine characteristics of at least one of the other vehicles that appear in the image (**S**) picked up by said camera (**11**) on the basis of data with respect to a feature of the other vehicles (**A1, A2**) that is contained in the signal received by said signal receiving device (**12**) and the position relationship determined by said position relationship determining device (**10**); and
a vehicle identifying device (**10**) operative to identify a specified vehicle **(A1**) among others (**A1, A2**) that appear in the image (**S**) picked up by said camera (**11**) on the basis of the vehicle's characteristics estimated by said surrounding vehicle estimation device (**10**).

2. The travel assistance device for a vehicle (**1**) of claim 1, further comprising an image-area restricting device (**10**) operative to restrict an area (**S'**) of the image for identification by said vehicle identifying device (**10**) on the basis of the position relationship determined by said position relationship determining device (**10**).

3. The travel assistance device for a vehicle (**1**) of one of the preceding claims, further comprising a vehicle-crash possibility estimating device (**10**) operative to estimate a possibility of a crash between the traveling vehicle (**V**) and the vehicle (**A1**) specified by said vehicle identifying device (**10**).

4. The travel assistance device for a vehicle (**1**) of claim 3, wherein said vehicle-crash possibility estimating device (**10**) is configured to estimate the possibility of the crash on the basis of respective histories with respect to a traveling speed and/or a traveling direction of the traveling vehicle (**V**) and/or the vehicle (**A1**) specified by said vehicle identifying device (**10**).

5. The travel assistance device for a vehicle (**1**) of claim 3 or 4, wherein said vehicle-crash possibility estimating device (**10**) is configured to also estimate a hitting portion and/or angle at the crash, and there is provided a passenger protection device (**15 - 18**) to operate on the basis of the hitting portion and/or angle estimated by the vehicle-crash possibility estimating device (**10**) so as to protect a passenger of the traveling vehicle (**V**).

6. A travel assistance method for a vehicle (**1**), comprising the following steps:
picking up an image (**S**) of surroundings of a traveling vehicle (**V**);
detecting a position of the traveling vehicle (**V**);
receiving a signal from at least one of other vehicles (**A1, A2**) than the traveling vehicle (**V**) through communication between vehicles;
determining a position relationship between the traveling vehicle (**V**) and the other vehicles (**A1, A2**) on the basis of the detected position of the traveling vehicle (**V**) and data with respect to a position of at least one the other vehicles (**A1, A2**) that is contained in the signal received;
estimating or determining characteristics of at least one of the other vehicles that appear in the picked up image (**S**) on the basis of data with respect to a feature of the other vehicles (**A1, A2**) that is contained in the received signal and the determined position relationship; and
identifying a specified vehicle (**A1**) among others (**A1, A2**) that appear in the picked up image (**S**) on the basis of the estimated or determined vehicle's characteristics.

7. The travel assistance method for a vehicle (**1**) of claim 6, further comprising a step of restricting an area (**S'**) of the image for identification or determining step on the basis of the determined position relationship.

8. The travel assistance method for a vehicle (**1**) of claim 6 or 7, further comprising a step of estimating a possibility of a crash between the traveling vehicle (**V**) and the vehicle (**A1**) specified in the specifying step.

9. The travel assistance method for a vehicle (**1**) of claim 9, wherein in said vehicle-crash possibility estimating step:
the possibility of the crash is estimated on the basis of respective histories with respect to a traveling speed and/or a traveling direction of the traveling vehicle (**V**) and/or the vehicle (**A1**), and/or
a hitting portion and/or angle at the crash is estimated, and there is provided a passenger protection device (**15 - 18**) to operate on the basis of the hitting portion and/or angle estimated so as to protect a passenger of the traveling vehicle (**V**).

10. A computer program product comprising computer readable instructions which, when loaded and executed on a suitable system perform the steps of a travel assistance method according to one of the preceding claims 6 to 9.
